# EUROPEAN PATENT APPLICATION

(11) **EP 4 122 570 A1**
(43) Date of publication of application: **25.01.2023**
(21) Application number: 21918968.5
(22) Date of filing: 15.10.2021
(51) Int. Cl.: A63F 13/85, A63F 13/55, A63F 13/847

(54) **SENDING METHOD AND APPARATUS FOR VIRTUAL ARTICLE INFORMATION, DISPLAY METHOD AND APPARATUS FOR VIRTUAL ARTICLE INFORMATION, AND TERMINAL**

(30) Priority: 13.01.2021 CN 202110039889
(71) Applicant: Tencent Technology (Shenzhen) Company Limited, Shenzhen, Guangdong 518057 (CN)
(72) Inventor: XIAO, Qinghua, Shenzhen, Guangdong 518057 (CN); LIU, Xiaohao, Shenzhen, Guangdong 518057 (CN); LIU, Peicheng, Shenzhen, Guangdong 518057 (CN); JIANG, Shuai, Shenzhen, Guangdong 518057 (CN); LIN, Shan, Shenzhen, Guangdong 518057 (CN)
(74) Representative: AWA Sweden AB
(86) International application number: PCT/CN2021/124203
(87) International publication number: WO 2022/151777

(57) **Abstract**

Embodiments of the present disclosure provide a virtual item information transmission method and apparatus, a virtual item information display method and apparatus, and a terminal, and belong to the field of Internet technologies. The method includes: displaying a game play interface (201); displaying a virtual item selection interface in response to an item selection operation (202); displaying, in response to an information transmission operation on a target virtual item in the at least one virtual item, item usage suggestion information transmitted to a target recipient account (203). In the present disclosure, the item usage suggestion information is transmitted to the recipient account through the virtual item selection interface, the item usage suggestion information may be transmitted directly by triggering an option of a virtual item in the virtual item selection interface, and a sender may transmit the item usage suggestion information to a client logged in to by the recipient account without remembering a name of the virtual item and manually inputting the item usage suggestion information, which is simple to operate, thereby improving the communication efficiency of a user for the virtual item in a multiplayer online game.

## Description

### CROSS-REFERENCES TO RELATED APPLICATION

The present disclosure claims priority to Chinese Patent Application No. 202110039889.4, entitled "SENDING METHOD AND APPARATUS FOR VIRTUAL ARTICLE INFORMATION, DISPLAY METHOD AND APPARATUS FOR VIRTUAL ARTICLE INFORMATION, AND TERMINAL" filed on January 13, 2021, which is incorporated herein by reference in its entirety.

### FIELD OF THE TECHNOLOGY

Embodiments of the present disclosure relate to the field of Internet technologies, and in particular, to a virtual item information transmission method and apparatus, a virtual item information display method and apparatus, and a terminal.

### BACKGROUND OF THE DISCLOSURE

A battle game is a game in which a plurality of user accounts compete in the same scenario. Optionally, the battle game may be a multiplayer online battle arena (MOBA) game.

In the related technology, in a chat session interface in a game battle, a player may suggest, in the form of text description, that a teammate of the player uses a virtual item in the game battle. For example, the player may transmit "Suggest that a teammate 1 uses a virtual item 1 next" in the chat session interface, and after the teammate 1 sees this suggestion information, the teammate 1 may search a store for the virtual item 1 and order the virtual item 1.

However, in the foregoing related technology, the player needs to input relatively long text information and remember a name of the virtual item, to provide a usage suggestion of the virtual item for the teammate, resulting in low communication efficiency.

### SUMMARY

Embodiments of the present disclosure provide a virtual item information transmission method and apparatus, a virtual item information display method and apparatus, and a terminal, to improve the communication efficiency of a user for a virtual item in a multiplayer online game (for example, a game battle). The technical solutions are described as follows:

In an aspect, the embodiments of the present disclosure provide a virtual item information transmission method, performed by a terminal, the method including:
displaying a game play interface of a multiplayer online game;
displaying a virtual item selection interface of the multiplayer online game in response to an item selection operation, the virtual item selection interface including an option of at least one virtual item; and
displaying, in response to an information transmission operation on a target virtual item in the at least one virtual item, item usage suggestion information transmitted to a target recipient account, the item usage suggestion information being used for instructing the target recipient account to use the target virtual item in the multiplayer online game.

In another aspect, the embodiments of the present disclosure provide a virtual item information display method, performed by a terminal, the method including:
displaying a game play interface of a multiplayer online game;
receiving item usage suggestion information from a sender account, the item usage suggestion information being used for instructing to use a target virtual item in the multiplayer online game; and
displaying a shortcut usage control of the target virtual item based on the item usage suggestion information, the shortcut usage control being used for selecting and using the target virtual item.

In another aspect, the embodiments of the present disclosure provide a virtual item information transmission apparatus, including:
an interface display module, configured to display a game play interface of a multiplayer online game,
the interface display module being further configured to display a virtual item selection interface of the multiplayer online game in response to an item selection operation, the virtual item selection interface including an option of at least one virtual item; and
an information transmission module, configured to display, in response to an information transmission operation on a target virtual item in the at least one virtual item, item usage suggestion information transmitted to a target recipient account, the item usage suggestion information being used for instructing the target recipient account to use the target virtual item in the multiplayer online game.

In still another aspect, the embodiments of the present disclosure provide a virtual item information display apparatus, including:
an interface display module, configured to display a game play interface of a multiplayer online game;
an information receiving module, configured to receive item usage suggestion information from a sender account, the item usage suggestion information being used for instructing to use a target virtual item in the multiplayer online game; and
a control display module, configured to display a shortcut usage control of the target virtual item based on the item usage suggestion information, the shortcut usage control being used for selecting and using the target virtual item.

In still another aspect, the embodiments of the present disclosure provide a terminal, including a processor and a memory, the memory storing at least one instruction, at least one program, a code set, or an instruction set, and the at least one instruction, the at least one program, the code set, or the instruction set being loaded and executed by the processor to implement the virtual item information transmission method described in the foregoing aspect or the virtual item information display method described in the foregoing aspect.

In still another aspect, the embodiments of the present disclosure provide a computer-readable storage medium, storing at least one instruction, at least one program, a code set, or an instruction set, and the at least one instruction, the at least one program, the code set, or the instruction set being loaded and executed by a processor to implement the virtual item information transmission method described in the foregoing aspect or the virtual item information display method described in the foregoing aspect.

In still another aspect, the embodiments of the present disclosure provide a computer program product or a computer program. The computer program product or the computer program includes computer instructions, and the computer instructions are stored in a computer-readable storage medium. A processor of a terminal reads the computer instructions from the computer-readable storage medium, and the processor executes the computer instructions, to cause the terminal to perform the virtual item information transmission method described in the foregoing aspect or to implement the virtual item information display method described in the foregoing aspect.

The technical solutions provided in the embodiments of the present disclosure may bring the following beneficial effects:

The item usage suggestion information is transmitted to the recipient account through the virtual item selection interface, the item usage suggestion information may be transmitted directly by triggering an option of a virtual item in the virtual item selection interface, and a sender may transmit the item usage suggestion information to a client logged in to by the recipient account without remembering a name of the virtual item and manually inputting the item usage suggestion information, which is simple to operate, thereby improving the communication efficiency of the user for the virtual item in the multiplayer online game (for example, the game battle).

### BRIEF DESCRIPTION OF THE DRAWINGS

To describe the technical solutions in embodiments of the present disclosure more clearly, the following briefly describes the accompanying drawings required for describing the embodiments. Apparently, the accompanying drawings in the following description show only some embodiments of the present disclosure, and a person of ordinary skill in the art may still derive other accompanying drawings from these accompanying drawings without creative efforts.
FIG. 1 is an architecture diagram of a computer system according to an embodiment of the present disclosure.
FIG. 2 is a flowchart of a virtual item information transmission method according to an embodiment of the present disclosure.
FIG. 3 is a schematic diagram of a virtual item selection interface according to an embodiment of the present disclosure.
FIG. 4 is a flowchart of a virtual item information transmission method according to another embodiment of the present disclosure.
FIG. 5 is a schematic diagram of an option of a recipient account according to an embodiment of the present disclosure.
FIG. 6 is a schematic diagram of an option of a recipient account according to another embodiment of the present disclosure.
FIG. 7 is a schematic diagram of transmission completion prompt information according to an embodiment of the present disclosure.
FIG. 8 is a flowchart of a virtual item information display method according to an embodiment of the present disclosure.
FIG. 9 is a flowchart of a virtual item information display method according to another embodiment of the present disclosure.
FIG. 10 is a schematic diagram of item usage suggestion information according to an embodiment of the present disclosure.
FIG. 11 is a schematic diagram of reserving to exchange for an interface according to an embodiment of the present disclosure.
FIG. 12 is a flowchart of a virtual item information display method according to another embodiment of the present disclosure.
FIG. 13 is a block diagram of a virtual item information transmission apparatus according to an embodiment of the present disclosure.
FIG. 14 is a block diagram of a virtual item information display apparatus according to an embodiment of the present disclosure.
FIG. 15 is a structural block diagram of a terminal according to an embodiment of the present disclosure.

### DESCRIPTION OF EMBODIMENTS

To make objectives, technical solutions, and advantages of the present disclosure clearer, the following further describes implementations of the present disclosure in detail with reference to the accompanying drawings.

First, terms involved in the embodiments of the present disclosure are briefly described.

### 1. Virtual object

A virtual object is a game role controlled by a user account in a game application. The virtual object may also be referred to as a virtual role. The virtual object may be in a character shape, an animal shape, a cartoon shape, or another shape. This is not limited in this embodiment of the present disclosure. The virtual object may be presented in a three-dimensional (3D) form or a two-dimensional (2D) form. This is not limited in this embodiment of the present disclosure.

In different game applications, operations that can be performed by the virtual object controlled by the user account may be different. For example, in a shooting game application, the user account may control the virtual object to perform operations such as shooting, running, jumping, gun picking up, and ammunition filling. In another example, in a MOBA game application, the user account may control the virtual object to perform operations such as moving, skill releasing, enemy killing, and enemy turret destroying.

### 2. Virtual item

A virtual item is an item with which a virtual object is equipped. The virtual item includes, but is not limited to, at least one of the following: virtual clothing, materials for making virtual clothing, game equipment, a role skin, or a virtual pet. The virtual clothing may include clothes and decorations worn on different parts of the virtual object, such as tops, trousers, shoes, hats, and accessories. The materials for making virtual clothing may include materials such as silk, cotton, animal skins, rough cloth strips, branches, plant roots, nylon cloth, fiber cloth, or plastic. The game equipment may be equipment of different types, such as a gun, a bow, a blade, a sword, and an ax. The role skin is an appearance of the game role (for example, the virtual object). The virtual pet is a pet possessed by the game role (for example, the virtual object), for example, an animal such as a cat, a dog, or a rabbit, or a cartoon-shaped virtual creature. In different game applications, types, species, and patterns of virtual items may be all different. This is not limited in this embodiment of the present disclosure.

### 3. MOBA

MOBA game is an arena game in which different virtual teams on at least two opposing camps occupy respective map regions in a virtual environment, and compete against each other using specific victory conditions as goals. The victory conditions include, but are not limited to at least one of occupying forts or destroy forts of the opposing camps, killing virtual roles in the opposing camps, ensure own survivals in a specified scenario and time, seizing a specific resource, and outscoring the opponent within a specified time. The battle arena game may take place in rounds. The same map or different maps may be used in different rounds of the battle arena game. Each virtual team includes one or more virtual roles, such as 1 virtual role, 2 virtual roles, 3 virtual roles, or 5 virtual roles.

### 4. MOBA game

MOBA game is a game in which several forts are provided in a virtual environment, and users on different camps control virtual roles to battle in the virtual environment, occupy forts or destroy forts of the opposing camp. For example, in the MOBA game, the users may be divided into two opposing camps. The virtual roles controlled by the users are scattered in the virtual environment to compete against each other, and the victory condition is to destroy or occupy all enemy forts. The MOBA game takes place in rounds. A duration of a round of the MOBA game is from a time point at which the game starts to a time point at which the victory condition is met.

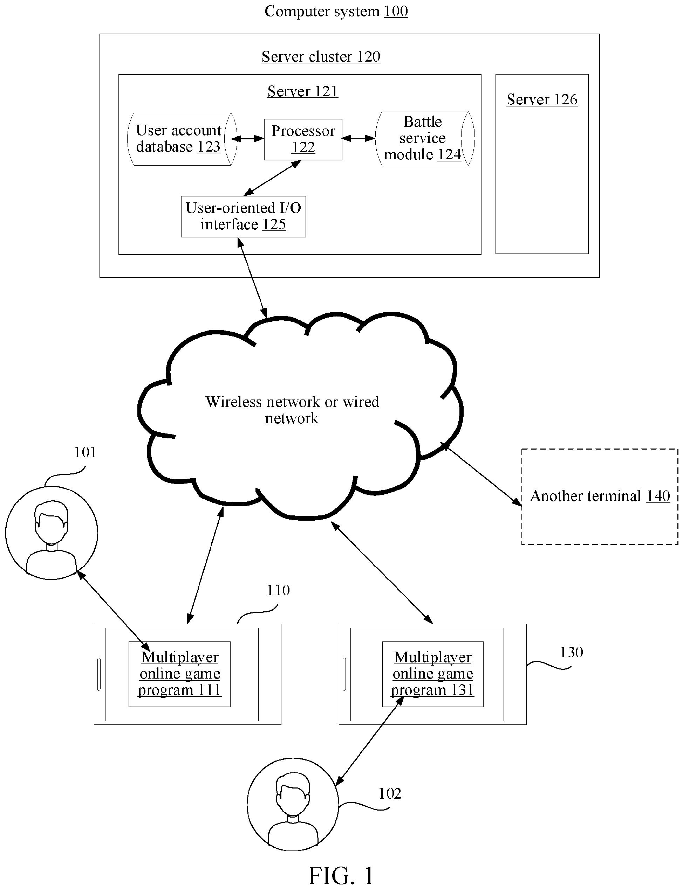

FIG. 1 is an architecture diagram of a computer system according to an embodiment of the present disclosure. The computer system 100 includes: a first terminal 110, a server cluster 120, and a second terminal 130.

A client 111 supporting display of a virtual environment is installed and run on the first terminal 110, and the client 111 may be a multiplayer online game program. When the first terminal runs the client 111, a user interface (UI) of the client 111 is displayed on a screen of the first terminal 110. In some embodiments, the client 111 may be any one of a military simulation program, a MOBA game, a battle arena game, or a simulation game (SLG). In this embodiment of the present disclosure, an example in which the client 111 is a MOBA game is used for description. The first terminal 110 is a terminal used by a first user 101. The first user 101 uses the first terminal 110 to control a first virtual object located in the virtual environment to perform activities, and the first virtual object may be referred to as a master virtual role of the first user 101. A game account of the first user may be referred to as a first user account, and the first virtual object is a virtual object controlled by the first user account. The activities of the first virtual object include, but are not limited to: at least one of adjusting body postures, crawling, walking, running, riding, flying, jumping, driving, picking, shooting, attacking, or throwing. Exemplarily, the first virtual object may be a first virtual character, such as a simulated character role or a cartoon character role.

A client 131 supporting the virtual environment is installed and run on the second terminal 130, and the client 131 may be a multiplayer online game program. When the second terminal 130 runs the client 131, a UI of the client 131 is displayed on a screen of the second terminal 130. The client may be any one of a military simulation program, a MOBA game, a battle arena game, or an SLG. In this embodiment of the present disclosure, an example in which the client is a MOBA game is used for description. The second terminal 130 is a terminal used by a second user 102. The second user 102 uses the second terminal 130 to control a second virtual object located in the virtual environment to perform activities, and the second virtual object may be referred to as a master virtual role of the second user 102. A game account of the second user may be referred to as a second user account, and the second virtual object is a virtual object controlled by the second user account. Exemplarily, the second virtual object may be a second virtual character, such as a simulated character role or a cartoon character role.

In some embodiments, the first virtual character and the second virtual character are located in the same virtual environment. In some embodiments, the first virtual character and the second virtual character may belong to the same camp, the same team, or the same organization, and the first virtual character and the second virtual character may further have a friend relationship, or have a temporary communication permission.

Exemplarily, the first user account may be referred to as a sender account, and the second user account may be referred to as a recipient account. Certainly, in another embodiment, the first user account may be referred to as a recipient account, and the second user account may be referred to as a sender account. The sender account may transmit item usage suggestion information in the following to the recipient account.

In some embodiments, the client installed on the first terminal 110 is the same as that installed on the second terminal 130, or the clients installed on the two terminals are the same type of clients on different operating system platforms (Android system or iOS system). The first terminal 110 may generally refer to one of a plurality of terminals, and the second terminal 130 may generally refer to another one of a plurality of terminals. In this embodiment of the present disclosure, only the first terminal 110 and the second terminal 130 are used as an example for description. The first terminal 110 and the second terminal 130 are of the same or different device types, and the device type includes at least one of a smartphone, a tablet computer, an e-book reader, a laptop portable computer, or a desktop computer.

FIG. 1 shows only two terminals. However, a plurality of other terminals 140 may also access the server cluster 120 in different embodiments. In some embodiments, at least one terminal 140 may alternatively be included. The terminal 140 is a terminal corresponding to a developer. A developing and editing platform for the client of a virtual environment is installed on the terminal 140. The developer may edit and update the client on the terminal 140 and transmit an updated client installation package to the server cluster 120 through a wired or wireless network. The first terminal 110 and the second terminal 130 may download the client installation package from the server cluster 120 to update the client.

The first terminal 110, the second terminal 130, and the another terminal 140 may be connected to the server cluster 120 through the wireless network or the wired network.

The server cluster 120 may be at least one of one server, a plurality of servers, a cloud computing platform, or a virtualization center. The server cluster 120 may be configured to provide a backend service for a client supporting a 3D virtual environment. In some embodiments, the server cluster 120 is responsible for primary computing work, and the terminal is responsible for secondary computing work; the server cluster 120 is responsible for secondary computing work, and the terminal is responsible for primary computing work; or the server cluster 120 and the terminals (for example, the first terminal 110 and the second terminal 130) perform collaborative computing by using a distributed computing architecture among each other.

In some embodiments, the foregoing terminals and the servers are all computer devices.

In an exemplary example, the server cluster 120 includes a server 121 and a server 126. The server 121 includes a processor 122, a user account database 123, a battle service module 124, and a user-oriented input/output (I/O) interface 125. The processor 122 is configured to load instructions stored in the server 121, and process data in the user account database 123 and the battle service module 124. The user account database 123 is configured to store data of user accounts used by the first terminal 110, the second terminal 130, and the another terminal 140, for example, avatars of the user accounts, nicknames of the user accounts, battle effectiveness indexes of the user accounts, and service zones of the user accounts. The battle service module 124 is configured to provide a plurality of battle rooms for the users to battle. The user-oriented I/O interface 125 is configured to establish communication between the first terminal 110 and/or the second terminal 130 through the wireless network or the wired network for data exchange.

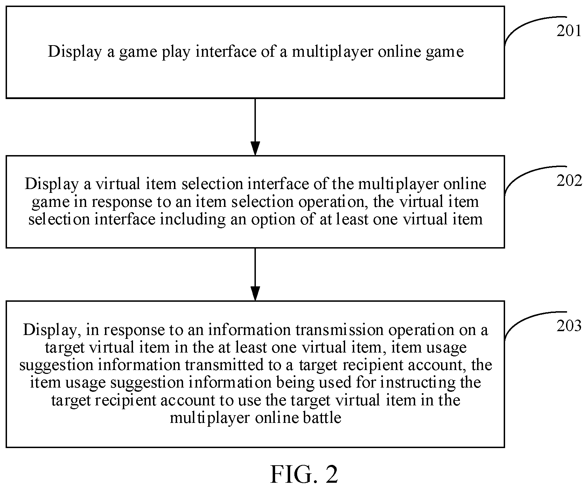

FIG. 2 is a flowchart of a virtual item information transmission method according to an embodiment of the present disclosure. The method is applicable to the first terminal 110 or the second terminal 130 shown in FIG. 1 (for example, the client 111 corresponding to the first terminal 110 or the client 131 corresponding to the second terminal 130), and the method may include the following steps:

Step 201. Display a game play interface of a multiplayer online game.

The multiplayer online game is a battle in which different user accounts control different virtual objects to battle in an application. The "multiplayer online game" in this embodiment of the present disclosure may alternatively be understood as a "game battle". For example, the game battle may be a battle in which different user accounts control different virtual objects to battle in a game application. Exemplarily, the game battle may be a battle in which different virtual teams on at least two opposing camps occupy forts in a virtual environment. A round of game battle requires at least two virtual objects, and the at least two virtual objects may include: a virtual object controlled by a sender account and a virtual object separately controlled by at least one recipient account. Exemplarily, the sender account and the recipient account may be on the same camp. Exemplarily, an example in which there is a hostile relationship between two camps is used. If each camp includes virtual objects respectively controlled by 5 user accounts, the 5 user accounts may include 1 sender account and 4 recipient accounts.

A game play interface is an interface of an application displayed on the terminal, for example, a presentation interface of a game battle provided by the application. In this embodiment of the present disclosure, the game play interface may be a presentation interface of a game battle in the game application, and the game play interface may be used for presenting a virtual environment picture after the battle starts. In some embodiments, the game play interface includes a display layer and a control layer, and a display layer of the control layer is higher than a display layer of the display layer. The display layer is configured to display the virtual environment picture. Exemplarily, the virtual environment picture may be a picture of a virtual environment obtained by a camera, that is, a picture of a virtual environment captured by a camera in a virtual environment. For example, in the game battle, the camera observes the virtual environment by using an operated role as an observation center, to obtain the virtual environment picture. Exemplarily, the virtual environment picture includes at least two virtual objects. The control layer is a layer in which a control is located. Exemplarily, the control layer includes at least one control, and the at least one control may include a setting control, a chat session presentation area display control, a skill presentation control, a skill operation control, and the like. The controls included in the control layer are not limited in this embodiment of the present disclosure.

Step 202. Display a virtual item selection interface of the multiplayer online game in response to an item selection operation, the virtual item selection interface including an option of at least one virtual item.

In this embodiment of the present disclosure, the item selection operation is an operation performed when the user needs to select a virtual item, and may be used for triggering the client to display the virtual item selection interface. The "item selection operation" in this embodiment of the present disclosure may alternatively be understood as an "item selection instruction". That is, the virtual item selection interface of the multiplayer online game is displayed in response to the item selection instruction. In some embodiments, the item selection instruction may alternatively be an instruction generated by the client in response to the item selection operation, and used for indicating that the user needs to select a virtual item. For example, the client generates an item selection instruction in response to an operation performed by the user on a virtual item selection control, and the client then displays a virtual item selection interface of the game battle based on the item selection instruction for the user to select a virtual item.

The virtual item selection interface is an interface used for providing the user to select a virtual item. The virtual item selection interface includes an option of at least one virtual item, and an option of the at least one virtual item is used for the user to select the virtual item. In some embodiments, the option of the at least one virtual item may include an icon of the at least one virtual item, a name of the at least one virtual item, and the like.

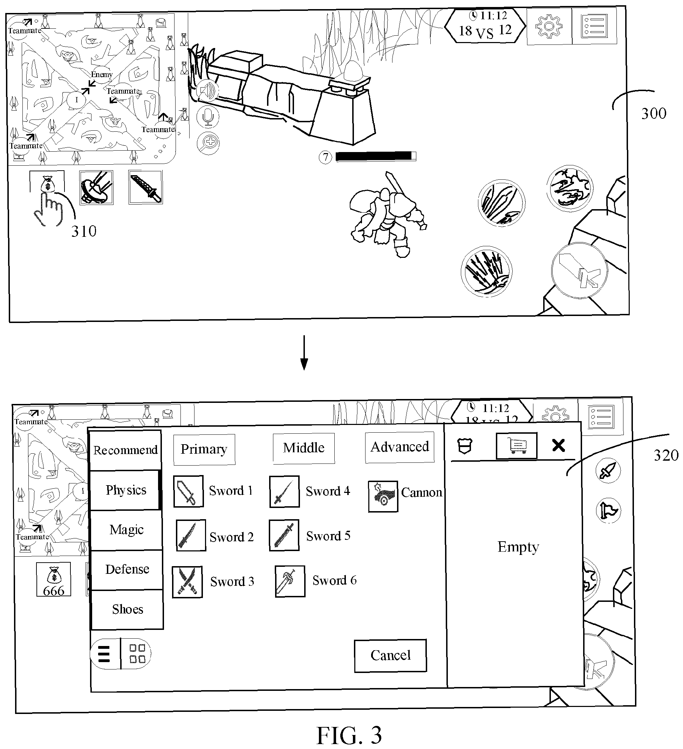

In one embodiment, as shown in FIG. 3, a game play interface 300 includes a virtual item selection control 310. The client displays a virtual item selection interface 320 in response to a trigger operation performed by the user on the virtual item selection control 310. Exemplarily, the virtual item selection interface 320 is displayed on an upper layer of the game play interface 300 in a superimposed manner.

Step 203. Display, in response to an information transmission operation on a target virtual item in the at least one virtual item, item usage suggestion information transmitted to a target recipient account.

The target virtual item may be any one of the at least one virtual item, or may be any of a plurality of virtual items in the at least one virtual item.

The information transmission operation is an operation that the user needs to push the item usage suggestion information of the virtual item. The "information transmission operation" in this embodiment of the present disclosure may alternatively be understood as an "information transmission instruction". That is, the item usage suggestion information is displayed in response to the information transmission instruction for the target virtual item. In some embodiments, the information transmission instruction may alternatively be an instruction generated by the client in response to an information transmission operation performed by the user on the target virtual item, and used for indicating that the client transmits information. In this embodiment of the present disclosure, the information transmission instruction is an instruction used for indicating that the client transmits information to the target recipient account, and the information may be the item usage suggestion information. The item usage suggestion information is used for indicating that the target recipient account uses the target virtual item in the multiplayer online battle.

Exemplarily, the target recipient account may be a variable account selected in real time by a sender, or may be a default specific account. The default specific account may be preset by the sender. Exemplarily, there may be one or a plurality of target recipient accounts. This is not limited in this embodiment of the present disclosure.

Exemplarily, the sender may first select the target virtual item, and then select the target recipient account; or the sender may first select the target recipient account, and then select the target virtual item.

In one embodiment, the client transmits, in response to the information transmission instruction of the user for the target virtual item, the item usage suggestion information to a client logged in to by the target recipient account.

In one embodiment, the client transmits an information transmission request to the server through the terminal in response to the information transmission instruction of the user for the target virtual item, and the information transmission request includes the item usage suggestion information. The server receives the information transmission request, and transmits the item usage suggestion information to the client logged in to by the target recipient account.

In one embodiment, the item usage suggestion information may be used for indicating virtual item information, and the virtual item information may be used for indicating information of the target virtual item. Exemplarily, the virtual item information may include at least one of the following: a name of the virtual item, a virtual resource corresponding to the virtual item, or an attribute of the virtual item. The name of the virtual item is used for identifying the virtual item, and names of different virtual items are different; the virtual resource corresponding to the virtual item is used for indicating an exchange amount of the virtual item; and the attribute of the virtual item may include a physical attribute, a magic attribute, a defense attribute, or the like. Certainly, in another embodiment, the virtual item may alternatively correspond to another attribute, which is not limited in this embodiment of the present disclosure. In one embodiment, the virtual item information may be in the form of text, an icon, or another form. This is not limited in this embodiment of the present disclosure.

The embodiment of the present disclosure can help the user transmit the virtual item information to a specific teammate in the multiplayer online game, and tell the teammate a correct selection of the virtual item, thereby improving the communication efficiency of the user for the virtual item in the multiplayer online game.

In summary, in the technical solutions provided in the embodiments of the present disclosure, the item usage suggestion information is transmitted to the recipient account through the virtual item selection interface, the item usage suggestion information may be transmitted directly by triggering an option of a virtual item in the virtual item selection interface, and a sender may transmit the item usage suggestion information to a client logged in to by the recipient account without remembering a name of the virtual item and manually inputting the item usage suggestion information, which is simple to operate, thereby improving the communication efficiency of the user for the virtual item in the multiplayer online game (for example, the game battle).

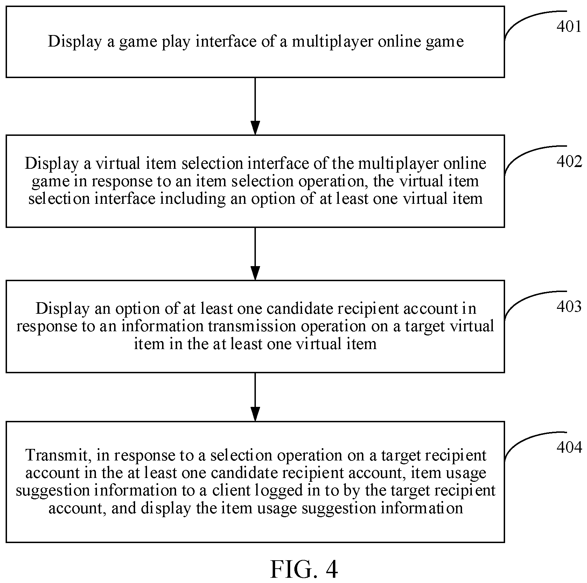

FIG. 4 is a flowchart of a virtual item information transmission method according to another embodiment of the present disclosure. The method is applicable to the first terminal 110 or the second terminal 130 shown in FIG. 1 (for example, the client 111 corresponding to the first terminal 110 or the client 131 corresponding to the second terminal 130), and the method may include the following steps:

Step 401. Display a game play interface of a multiplayer online game.

Step 402. Display a virtual item selection interface of the multiplayer online game in response to an item selection operation, the virtual item selection interface including an option of at least one virtual item.

For description of step 401 and step 402, refer to the foregoing embodiment, and details are not described herein again.

Step 403. Display an option of at least one candidate recipient account in response to an information transmission operation on a target virtual item in the at least one virtual item.

The option of the recipient account is used for a sender to select a recipient that receives item usage suggestion information.

In one embodiment, in response to a trigger operation for an option of a target virtual item, and when determining that an information transmission instruction for the target virtual item is received, the option of the at least one candidate recipient account is displayed. In an example, the option of the at least one candidate recipient account includes an icon of a virtual object controlled by the at least one candidate recipient account. In another example, the option of the at least one candidate recipient account includes an avatar of the at least one candidate recipient account. In still another example, the option of the at least one candidate recipient account includes an account name (a nickname) of the at least one candidate recipient account. By displaying the icon of the virtual object controlled by the at least one candidate recipient account, the sender may select the recipient more intuitively and efficiently than displaying the user account or the avatar of the user account or the account name of the user account. The reason is that it is easier to remember each virtual object controlled by a teammate, but it is time-consuming and laborious to remember the user account of the teammate or the avatar of the user account or the account name of the user account. In addition, it is convenient for the sender to confirm whether the target virtual item and the selected virtual object are suitable.

Exemplarily, the trigger operation for the option of the target virtual item may be performed in a manner such as a voice, a gesture, or touch. In one embodiment, the sender presses the option of the target virtual item, the client receives the trigger operation for the option of the target virtual item, and the client displays the option of the at least one candidate recipient account; and if the sender stops pressing the option of the target virtual item (that is, a finger of the sender releases), the client cancels display of the option of the at least one candidate recipient account.

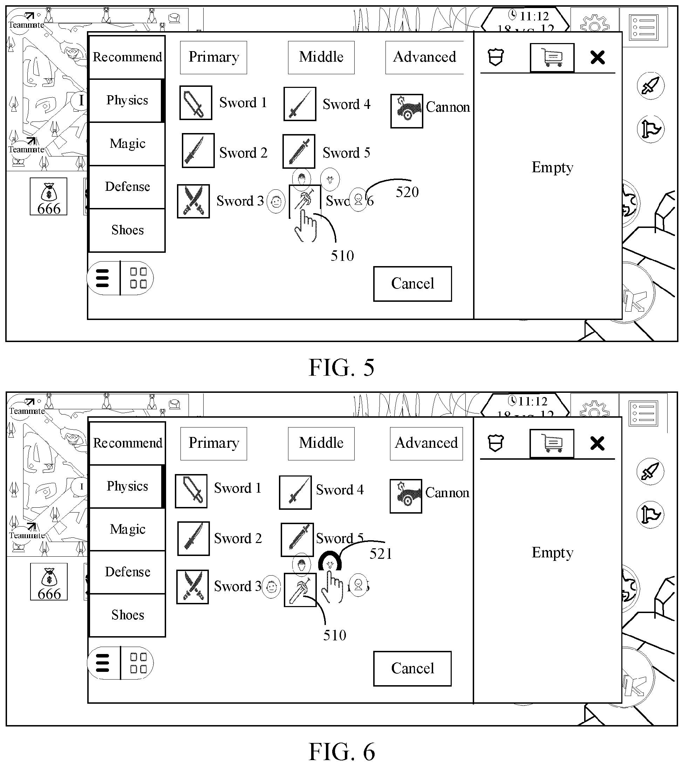

In one embodiment, the option of the at least one candidate recipient account is displayed around an option of the target virtual item. FIG. 5 is a schematic diagram of an option of a recipient account according to an embodiment of the present disclosure. When the sender presses an option 510 of a target virtual item, the client displays an option 520 of at least one candidate recipient account.

In one embodiment, a client logged in to by a sender account needs to confirm whether a virtual item selected by a sender is intended to be used by the sender or recommended for use by a teammate. In an example, this confirm process may include: exchanging or reserving to exchange for the target virtual item in response to a first operation for an option of the target virtual item; in response to a second operation for an option of the target virtual item, displaying the item usage suggestion information transmitted to the target recipient account, the first operation being different from the second operation. Exemplarily, if the client logged in to by the sender account confirms that a click operation on the option of the virtual item is received, it is confirmed that the virtual item is used by the sender; and if the client logged in to by the sender account confirms that a long press operation on the option of the virtual item is received, it is confirmed that the virtual item is recommended for use by the teammate. Exemplarily, the click operation and the long press operation may be distinguished by using a touch time of the option of the virtual item. For example, if the touch time is greater than or equal to a threshold, it is considered as the long press operation; and if the touch time is less than the threshold, it is considered as the click operation. Certainly, in another embodiment, the system may further assign different operation manners for the option of the virtual item according to whether the virtual item selected by the user is intended to be used by the user or recommended to the teammate. For example, an operation manner 1 is set for a case that the virtual item selected by the user is intended to be used by the user, an operation manner 2 is set for a case that the virtual item selected by the user is intended to be recommended for use by the teammate, and the operation manner 1 and the operation manner 2 are two different operation manners. This is not limited in this embodiment of the present disclosure. In another example, the game play interface includes a control 1 and a control 2. The control 1 is configured to provide a virtual item interface that may be used by the sender for the sender, and the control 2 is configured to provide a virtual item interface that may be recommended to the teammate for the sender.

Step 404. Transmit, in response to a selection operation on a target recipient account in the at least one candidate recipient account, item usage suggestion information to a client logged in to by the target recipient account, and display the item usage suggestion information.

In this embodiment of the present disclosure, the selection operation is a selection operation performed by the user for the option of the recipient account. The "selection operation" in this embodiment of the present disclosure may alternatively be understood as a "selection instruction". That is, in response to a selection instruction for the target recipient account, the client logged in to by the sender account sends the item usage suggestion information to the client logged in to by the target recipient account. In some embodiments, the selection instruction may alternatively be an instruction generated by the client in response to the selection operation performed by the user for the option of the target recipient account, and used for indicating the recipient account selected by the user to the client. For example, in response to the selection operation on the option of the target recipient account, the client logged in to by the sender account generates the selection instruction for the target recipient account, and the client logged in to by the sender account then transmits, based on the selection instruction, the item usage suggestion information to the client logged in to by the target recipient account. Exemplarily, the selection instruction may be triggered by the client in response to a manner such as a gesture, a voice, or touch of the user on the target recipient account.

In one embodiment, the selection operation may be a sliding operation from the option of the target virtual item to the option of the target recipient account. Exemplarily, in response to the sliding operation performed by the user from the option of the target virtual item to the option of the target recipient account, the client determines that the selection instruction for the target recipient account is received. In this manner, the selection of the target virtual item and the selection of the target recipient account are completed through a one-step operation. That is, the sender first clicks the option of the target virtual item, and a finger or a mouse focus then directly performs the sliding operation from the option of the target virtual item to the option of the target recipient account without leaving the option of the target virtual item, to trigger the selection of the target recipient account. The selection of the target virtual item and the selection of the target recipient account are completed through the one-step operation, which simplifies the user operation. In an intense multiplayer online game, this can save time for the user and help the user quickly transmit the information.

In one embodiment, the client logged in to by the sender account displays an option of at least one candidate recipient account, and the option of the at least one candidate recipient account includes an option of a default or recommended target recipient account; and when the option of the default or recommended target recipient account is a target recipient account intended by a sender account, the client logged in to by the sender account transmits, in response to ending the information transmission operation, the item usage suggestion information to a client logged in to by the default or recommended target recipient account. Exemplarily, if the default or recommended target recipient account is a target recipient account intended by the sender, the sender may directly release the option of the target virtual item, and trigger this operation that the client logged in to by the sender account transmits the item usage suggestion information to the client logged in to by the target recipient account, without performing the foregoing sliding selection process, thereby further saving the operation time. The reason is that in a round of the multiplayer online game, each virtual item generally has a suitable virtual object. For example, a virtual item 1 is suitable for a virtual object of a type 1, and there may be only one virtual object of each type in the multiplayer online game. Therefore, the system may select a suitable virtual object for the virtual item by default. That is, the system may select the default or recommended target recipient account. Exemplarily, the option of the default or recommended target recipient account and options of other recipient accounts are displayed in a distinguished manner. If the default or recommended target recipient account is not the target recipient account intended by the sender, the sender may perform a further manual selection.

In one embodiment, in response to the selection operation on the target recipient account, the option of the target recipient account and the options of other candidate recipient accounts are displayed in a distinguished manner. That is, after the client logged in to by the sender account receives the selection instruction for the target recipient account in the at least one candidate recipient account, the options of the target recipient account and the options of other candidate recipient accounts are displayed in a distinguished manner. Exemplarily, after receiving the selection instruction for the target recipient account in the at least one candidate recipient account, the option of the target recipient account is displayed in a first manner, and the options of the other candidate recipient accounts are displayed in a second manner. The first manner and the second manner are two different manners. For example, the option of the target recipient account is highlighted, while the options of other candidate recipient accounts are displayed normally (not highlighted); the option of the target recipient account is displayed flickeringly, while the options of other candidate recipient accounts are displayed normally (not displayed flickeringly); or the option of the target recipient account is displayed enlarged, while the options of other candidate recipient accounts are displayed normally (not displayed enlarged). Exemplarily, the normal display may refer to a display pattern when the option of the recipient account is initially displayed. Certainly, in another embodiment, the option of the target recipient account may alternatively have other display patterns. This is not limited in this embodiment of the present disclosure.

With reference to FIG. 5 and FIG. 6, in response to sliding of the finger of the sender from the option 510 of the target virtual item to the option 521 of the target recipient account, the client logged in to by the sender account displays the option of the target recipient account and the options of other candidate recipient accounts in a distinguished manner.

In one embodiment, after transmitting item usage suggestion information to the client logged in to by the target recipient account, the client logged in to by the sender account displays the item usage suggestion information. Exemplarily, the item usage suggestion information is displayed in a chat session presentation area of the game battle. In one embodiment, the item usage suggestion information is displayed only on the client logged in to by the sender account and the client logged in to by the target recipient account. That is, the item usage suggestion information is private, and can be seen only by the sender and the recipient.

In one embodiment, after transmitting the item usage suggestion information to the client logged in to by the target recipient account, the client logged in to by the sender account displays transmission completion prompt information. The transmission completion prompt information is used for indicating that the item usage suggestion information has been transmitted.

In one embodiment, after transmitting the item usage suggestion information to the client logged in to by the target recipient account, the client logged in to by the sender account displays transmission completion prompt information and the item usage suggestion information. The transmission completion prompt information is used for indicating that the item usage suggestion information has been transmitted.

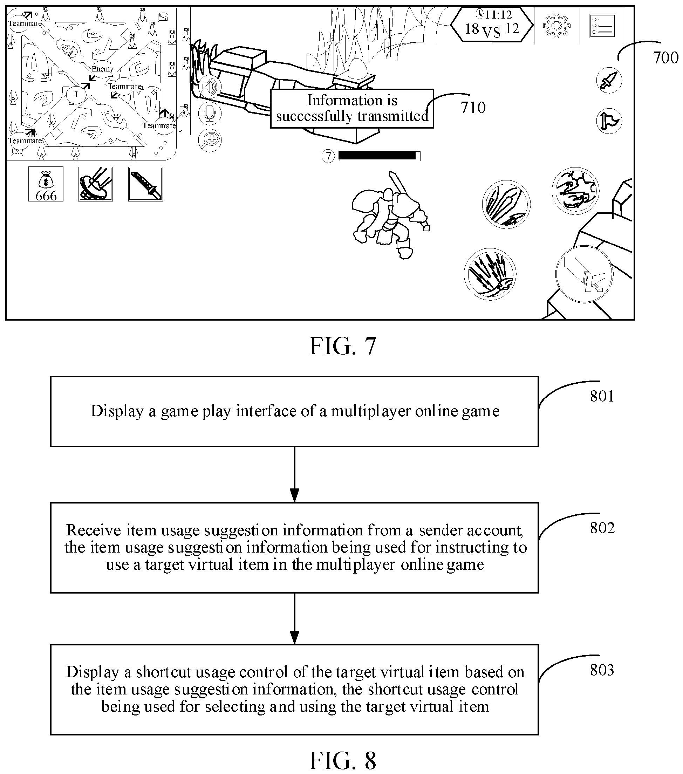

In one embodiment, after transmitting the item usage suggestion information to the client logged in to by the target recipient account, the client logged in to by the sender account cancels display of the virtual item selection interface. Exemplarily, when the finger of the sender releases the option of the target recipient account, display of the option of the at least one candidate recipient account is canceled, the display of the virtual item selection interface is canceled, and the transmission completion prompt information is simultaneously displayed. FIG. 7 is a schematic diagram of transmission completion prompt information according to an embodiment of the present disclosure. The transmission completion prompt information 710 is displayed on a game play interface 700 of a game battle.

In one embodiment, in response to a selection instruction, the client logged in to by the sender account displays transmission prompt information, the transmission prompt information being used for prompting the sender whether to transmit item usage suggestion information to the client logged in to by the target recipient account; and transmits, in response to a confirmation instruction for the transmission prompt information, the item usage suggestion information to the client logged in to by the target recipient account. By displaying the transmission prompt information, it is convenient for the sender to reconfirm whether the recipient account is accurate, thereby reducing a probability of selecting a wrong recipient account.

In one embodiment, after the user selects the target recipient account, recipient reselection prompt information may be further displayed, the recipient reselection prompt information being used for prompting a sender account whether to continue to select a recipient account, and transmit the item usage suggestion information to the selected recipient account; and in response to a confirmation operation on the recipient reselection prompt information, the option of the at least one candidate recipient account is returned to display. Exemplarily, in response to a selection instruction, the client logged in to by the sender account displays recipient reselection prompt information, the recipient reselection prompt information being used for prompting a sender whether to continue to select a recipient account; and in response to a received confirmation instruction for the recipient reselection prompt information, the client logged in to by the sender account returns to display the option of the at least one candidate recipient account. The confirmation instruction may alternatively be understood as the confirmation operation. In some embodiments, the confirmation instruction may alternatively be generated by the client based on the confirmation operation. By displaying the recipient reselection prompt information, after transmitting the item usage suggestion information to one recipient, the sender may conveniently reselect another recipient to transmit the item usage suggestion information, which is easy to operate.

In one embodiment, after the item usage suggestion information is transmitted to the target recipient account, information retransmission prompt information may be further displayed, the information retransmission prompt information being used for prompting a sender account whether to continue to transmit the item usage suggestion information; and the virtual item selection interface is displayed in response to a confirmation operation on the information retransmission prompt information. Exemplarily, in response to a selection instruction, the client logged in to by the sender account display the information retransmission prompt information; and in response to a received confirmation instruction for the information retransmission prompt information, the client logged in to by the sender account displays the virtual item selection interface of the game battle. By displaying the information retransmission prompt information, the sender may confirm whether to transmit the item usage suggestion information. If the sender needs to continue to transmit the item usage suggestion information, the sender may reselect the virtual item, and suggest that other recipient accounts use the virtual item in the game battle; and if the sender does not need to continue to transmit the item usage suggestion information, the client logged in to by the sender account may cancel the display of the virtual item selection interface. The embodiment of the present disclosure can avoid inconvenience caused because the user needs to operate the terminal again such that the client jumps from the game play interface to the virtual item selection interface when intending to retransmit the item usage suggestion information.

In summary, in the technical solutions provided in the embodiments of the present disclosure, the item usage suggestion information is transmitted to the recipient account through the virtual item selection interface, the item usage suggestion information may be transmitted directly by triggering an option of a virtual item in the virtual item selection interface, and a sender may transmit the item usage suggestion information to a client logged in to by the recipient account without remembering a name of the virtual item and manually inputting the item usage suggestion information, which is simple to operate, thereby improving the communication efficiency of the user for the virtual item in the multiplayer online game (for example, the game battle).

FIG. 8 is a flowchart of a virtual item information display method according to an embodiment of the present disclosure. The method is applicable to the first terminal 110 or the second terminal 130 shown in FIG. 1 (for example, the client 111 corresponding to the first terminal 110 or the client 131 corresponding to the second terminal 130), and the method may include the following steps:

Step 801. Display a game play interface of a multiplayer online game.

For related description of step 801, refer to the foregoing embodiment, and details are not described herein.

Step 802. Receive item usage suggestion information from a sender account, the item usage suggestion information being used for instructing to use a target virtual item in the multiplayer online game.

In one embodiment, the server transmits the item usage suggestion information to the client logged in to by the recipient account, and the client logged in to by the recipient account receives the item usage suggestion information from the sender account. That is, the item usage suggestion information may be forwarded by the client logged in to by the sender account to the client logged in to by the recipient account through the server.

Step 803. Display a shortcut usage control of the target virtual item based on the item usage suggestion information, the shortcut usage control being used for selecting and using the target virtual item.

In one embodiment, the client logged in to by the recipient account may recognize virtual item information in the item usage suggestion information, to generate the shortcut usage control of the target virtual item based on the virtual item information.

In one embodiment, the item usage suggestion information includes the shortcut usage control of the target virtual item.

Exemplarily, the shortcut usage control of the target virtual item is displayed in the game play interface. In response to a trigger operation performed by the recipient for the shortcut usage control, the recipient may quickly select the target virtual item, and the recipient may further control the virtual object to quickly use the target virtual item in the game battle.

A user who receives the item usage suggestion information may quickly preorder the virtual item through the shortcut usage control. This saves a long procedure of leaving for the equipment store for searching and adding to the preorder, and a problem that some new players do not know how to choose equipment and do not know the virtual item (the equipment) in the game battle can be effectively resolved.

In summary, in the technical solutions provided in the embodiments of the present disclosure, by receiving the item usage suggestion information from the sender, and displaying the shortcut usage control of the target virtual item based on the item usage suggestion information, the recipient may quickly select and use the target virtual item through the shortcut usage control, without browsing each virtual item in the virtual item selection interface to select the target virtual item, thereby improving the efficiency that the user selects and uses the virtual item.

In addition, by using the technical solutions provided in the embodiments of the present disclosure, a case that if the sender wrongly tells the name of the target virtual item, the recipient cannot find the target virtual item, and needs to requery the sender for a correct name of the target virtual item can be avoided in the related technology, thereby effectively improving the communication efficiency of the user for the virtual item in the multiplayer online battle (for example, the game battle).

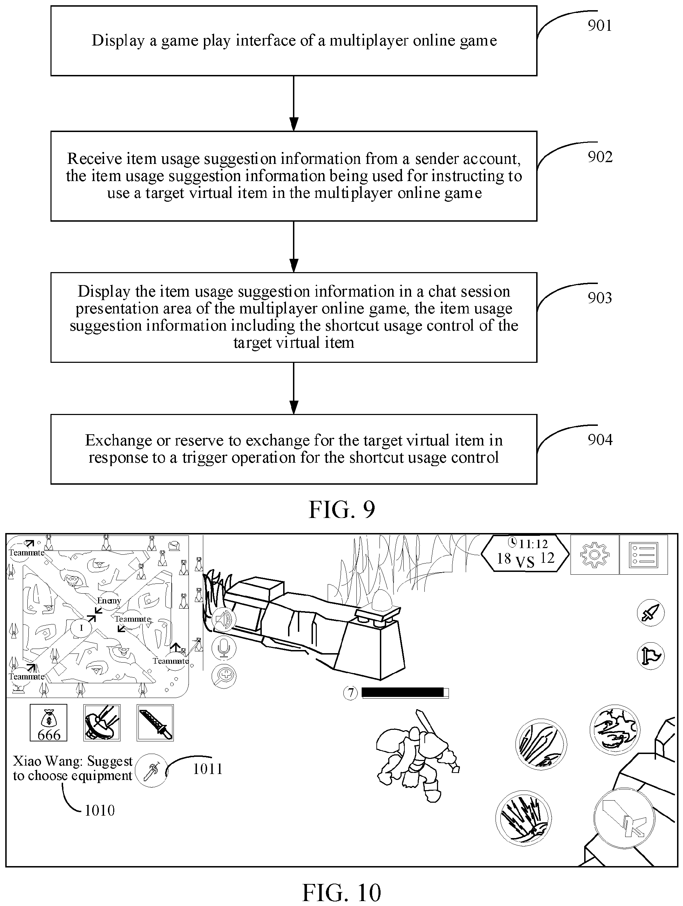

FIG. 9 is a flowchart of a virtual item information display method according to another embodiment of the present disclosure. The method is applicable to the first terminal 110 or the second terminal 130 shown in FIG. 1 (for example, the client 111 corresponding to the first terminal 110 or the client 131 corresponding to the second terminal 130), and the method may include the following steps:

Step 901. Display a game play interface of a multiplayer online game.

Step 902. Receive item usage suggestion information from a sender account, the item usage suggestion information being used for instructing to use a target virtual item in the multiplayer online game.

For related description of step 901 and step 902, refer to the foregoing embodiment, and details are not described herein again.

Step 903. Display the item usage suggestion information in a chat session presentation area of the multiplayer online game, the item usage suggestion information including the shortcut usage control of the target virtual item.

The chat session presentation area is an area used for displaying a chat session. Exemplarily, the chat session presentation area is a chat session presentation area of the sender and the recipient. The item usage suggestion information can be displayed only on the client logged in to by the recipient account, and can be seen only by the recipient. That is, the item usage suggestion information is displayed in the form of a private chat. Exemplarily, the item usage suggestion information may alternatively be displayed in the form of a group chat. For example, all users on the same camp as the sender or all users in the same game battle can see the item usage suggestion information. Compared with displaying the item usage suggestion information in the form of a group chat, the item usage suggestion information is displayed in the form of a private chat, which can improve the privacy between the sender and the recipient, and protect the privacy of the sender and the recipient.

In one embodiment, the shortcut usage control includes an icon of the target virtual item. FIG. 10 is a schematic diagram of item usage suggestion information according to an embodiment of the present disclosure. The item usage suggestion information 1010 includes a shortcut usage control 1011 of a target virtual item.

In one embodiment, the item usage suggestion information includes at least one of the following: account information of the sender (for example, an account name or an avatar of a user account of the sender), or account information of the target recipient account (for example, an account name or an avatar of a user account of the recipient). For example, assuming that a user A recommends a user B to use a virtual item 1, the item usage suggestion information may include account information corresponding to the user A and account information corresponding to the user B.

Step 904. Exchange or reserve to exchange for the target virtual item in response to a trigger operation for the shortcut usage control.

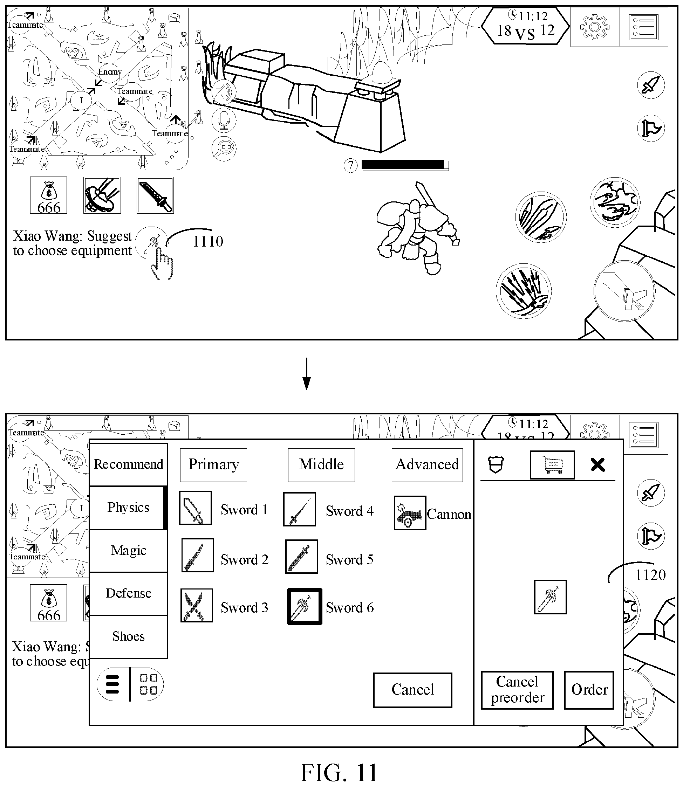

Exemplarily, the trigger operation for shortcut usage control may be triggered in a manner such as a voice, a gesture, or touch. Exemplarily, if a virtual resource possessed by the target recipient account can directly order the target virtual item, the target virtual item may be directly exchanged, and the virtual object is then equipped with the target virtual item; and if a virtual object of the target recipient account cannot directly order the target virtual item, the target virtual item may be reserved to exchange. FIG. 11 is a schematic diagram of reserving to exchange for an interface according to an embodiment of the present disclosure. If the recipient clicks a shortcut operation control 1110, the client adds the target virtual item to a preorder list 1120.

In one embodiment, in response to a trigger operation for the shortcut usage control, and when the virtual object controlled by the target recipient account is equipped with the target virtual item, the client displays equipment completion prompt information. The equipment completion prompt information is used for prompting that the target virtual item has been equipped.

In one embodiment, in response to a trigger operation for the shortcut usage control, the system automatically generates a next suggested virtual item based on the target virtual item (where the next suggested virtual item is not selected by the sender, but is determined by the system based on a previous virtual item selected by the sender, and is a virtual item recommended by the system to the target recipient), and prompts the next suggested virtual item to the client logged in to by the target recipient account.

In summary, in the technical solutions provided in the embodiments of the present disclosure, by receiving the item usage suggestion information from the sender, and displaying the shortcut usage control of the target virtual item based on the item usage suggestion information, the recipient may quickly select and use the target virtual item through the shortcut usage control, without browsing each virtual item in the virtual item selection interface to select the target virtual item, thereby improving the efficiency that the user selects and uses the virtual item.

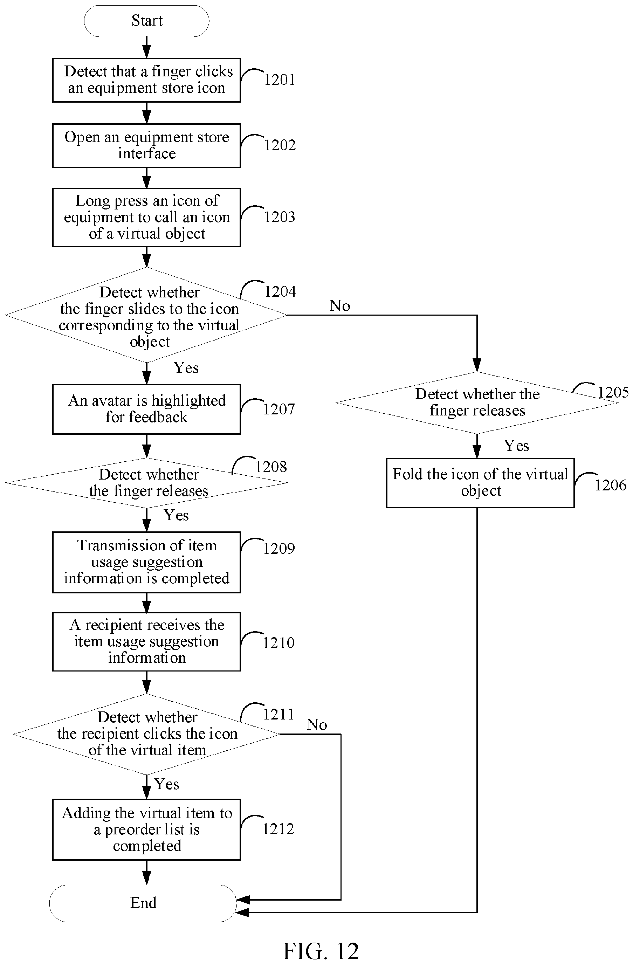

An example in which the virtual item selection control is an equipment store icon, the virtual item selection interface is an equipment store interface, the option of the virtual item is an icon of the virtual item, and the option of the recipient account is an icon of the virtual object controlled by the recipient is used for description. FIG. 12 is a flowchart of a virtual item information display method according to another embodiment of the present disclosure. The method may include the following steps:

Step 1201. A client logged in to by a sender account detects that a finger of a sender clicks an equipment store icon.

In one embodiment, the equipment store icon may also be referred to as an equipment store status.

Step 1202. The client logged in to by the sender account opens an equipment store interface.

Step 1203. The sender long presses an icon of a virtual item to call an icon of a virtual object controlled by at least one candidate recipient account.

Exemplarily, the icon of the virtual item may also be referred to as an equipment icon.

Exemplarily, the icon of the virtual object may also be referred to as an avatar of the virtual object or a hero avatar.

Step 1204. The client logged in to by the sender account detects whether the finger slides to the icon corresponding to the virtual object. In response to confirming that the finger does not slide to the icon corresponding to the virtual image, step 1205 starts to be performed; and in response to confirming that the finger slides to the icon corresponding to the virtual object, step 1207 starts to be performed.

Step 1205. The client logged in to by the sender account detects whether the sender releases the finger. In response to confirming that the sender releases the finger, step 1206 is performed.

Step 1206. The client logged in to by the sender account folds the icon of the virtual obj ect.

Exemplarily, the recipient and the sender are on a camp, and are teammates. In this case, in response to confirming that the sender releases the finger, a hero avatar of the teammate is folded.

Step 1207. The icon of the virtual object is highlighted.

Step 1208. The client logged in to by the sender account detects whether the sender releases the finger. In response to confirming that the sender releases the finger, step 1209 is performed.

Step 1209. Transmission of item usage suggestion information is completed.

Step 1210. A client logged in to by a recipient account receives the item usage suggestion information.

Step 1211. The client logged in to by the recipient account detects whether the recipient clicks the icon of the virtual item in the item usage suggestion information. In response to confirming that the recipient clicks the icon of the virtual item in the item usage suggestion information, step 1212 is performed.

Exemplarily, the icon of the virtual item may also be referred to as an equipment icon.

Step 1212. Adding the virtual item to a preorder list is completed.

Exemplarily, the virtual item may also be referred to as equipment.

In summary, in the technical solutions provided in the embodiments of the present disclosure, the item usage suggestion information is transmitted to the recipient account through the virtual item selection interface, the item usage suggestion information may be transmitted directly by triggering an option of a virtual item in the virtual item selection interface, and a sender may transmit the item usage suggestion information to a client logged in to by the recipient account without remembering a name of the virtual item and manually inputting the item usage suggestion information, which is simple to operate, thereby improving the communication efficiency of the user for the virtual item in the multiplayer online game (for example, the game battle).

The following describes apparatus embodiments of the present disclosure, which can be used for executing the method embodiments of the present disclosure. For details not disclosed in the apparatus embodiments of the present disclosure, refer to the method embodiments of the present disclosure.

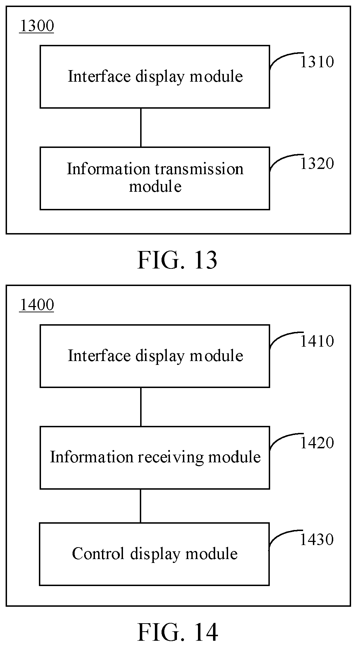

FIG. 13 is a block diagram of a virtual item information transmission apparatus according to an embodiment of the present disclosure. The apparatus has functions of implementing the foregoing embodiments of the virtual item information transmission method. The functions may be implemented by hardware, or may be implemented by hardware executing corresponding software. The apparatus may be a terminal, or may be disposed in a terminal. The apparatus 1300 may include: an interface display module 1310 and an information transmission module 1320.

The interface display module 1310 is configured to display a game play interface of a multiplayer online game.

The interface display module 1310 is further configured to display a virtual item selection interface of the multiplayer online game in response to an item selection operation, the virtual item selection interface including an option of at least one virtual item.

The information transmission module 1320 is configured to display, in response to an information transmission operation on a target virtual item in the at least one virtual item, item usage suggestion information transmitted to a target recipient account, the item usage suggestion information being used for instructing the target recipient account to use the target virtual item in the multiplayer online game.

In summary, in the technical solutions provided in the embodiments of the present disclosure, the item usage suggestion information is transmitted to the recipient account through the virtual item selection interface, the item usage suggestion information may be transmitted directly by triggering an option of a virtual item in the virtual item selection interface, and a sender may transmit the item usage suggestion information to a client logged in to by the recipient account without remembering a name of the virtual item and manually inputting the item usage suggestion information, which is simple to operate, thereby improving the communication efficiency of the user for the virtual item in the multiplayer online game.

In an exemplary embodiment, the information transmission module 1320 includes:
an option display unit (not shown in the figure), configured to display an option of at least one candidate recipient account; and
an information transmission unit (not shown in the figure), configured to transmit, in response to a selection operation on the target recipient account in the at least one candidate recipient account, the item usage suggestion information to a client logged in to by the target recipient account, and display the item usage suggestion information.

In an exemplary embodiment, the option display unit is configured to display the option of the at least one candidate recipient account around an option of the target virtual item.

In an exemplary embodiment, the selection operation is a sliding operation from an option of the target virtual item to an option of the target recipient account.

In an exemplary embodiment, the option display unit is further configured to, in response to the selection operation on the target recipient account, display an option of the target recipient account and options of other candidate recipient accounts in a distinguished manner.

In an exemplary embodiment, the interface display module 1310 is further configured to:
display recipient reselection prompt information, the recipient reselection prompt information being used for prompting a sender account whether to continue to select a recipient account, and transmit the item usage suggestion information to the selected recipient account; and
in response to a confirmation operation on the recipient reselection prompt information, return to display the option of the at least one candidate recipient account.

In an exemplary embodiment, the interface display module 1310 is further configured to:
display information retransmission prompt information, the information retransmission prompt information being used for prompting a sender account whether to continue to transmit the item usage suggestion information; and
display the virtual item selection interface in response to a confirmation operation on the information retransmission prompt information.

In an exemplary embodiment, the option of the at least one candidate recipient account includes an icon of a virtual object controlled by the at least one candidate recipient account; or
the option of the at least one candidate recipient account includes an avatar of the at least one candidate recipient account.

In an exemplary embodiment, the option of the at least one candidate recipient account includes an option of a default or recommended target recipient account; and
the information transmission unit is further configured to, when the option of the default or recommended target recipient account is a target recipient account intended by a sender account, transmit, in response to ending the information transmission operation, the item usage suggestion information to a client logged in to by the default or recommended target recipient account.

In an exemplary embodiment, the apparatus 1300 further includes an item exchange module (not shown in the figure).

The item exchange module is configured to exchange or reserve to exchange for the target virtual item in response to a first operation for an option of the target virtual item.

The information transmission module 1320 is further configured to display, in response to a second operation for an option of the target virtual item, the item usage suggestion information transmitted to the target recipient account, the first operation being different from the second operation.

FIG. 14 is a block diagram of a virtual item information display apparatus according to an embodiment of the present disclosure. The apparatus has functions of implementing the foregoing method embodiments of the virtual item information display method. The functions may be implemented by hardware, or may be implemented by hardware executing corresponding software. The apparatus may be a terminal, or may be disposed in a terminal. The apparatus 1400 may include: an interface display module 1410 and an information receiving module 1420.

The interface display module 1410 is configured to display a game play interface of a multiplayer online game;
the information receiving module 1420 is configured to receive item usage suggestion information from a sender account, the item usage suggestion information being used for instructing to use a target virtual item in the multiplayer online game; and
a control display module 1430 is configured to display a shortcut usage control of the target virtual item based on the item usage suggestion information, the shortcut usage control being used for selecting and using the target virtual item.

In summary, in the technical solutions provided in the embodiments of the present disclosure, by receiving the item usage suggestion information from the sender, and displaying the shortcut usage control of the target virtual item based on the item usage suggestion information, the recipient may quickly select and use the target virtual item through the shortcut usage control, without browsing each virtual item in the virtual item selection interface to select the target virtual item, thereby improving the efficiency that the user selects and uses the virtual item.

In an exemplary embodiment, the control display module 1430 is configured to display the item usage suggestion information in a chat session presentation area of the multiplayer online game, the item usage suggestion information including the shortcut usage control of the target virtual item.

In an exemplary embodiment, the apparatus 1400 further includes an item exchange module.

The item exchange module (not shown in the figure) is configured to exchange or reserve to exchange for the target virtual item in response to a trigger operation for the shortcut usage control.

In an exemplary embodiment, the shortcut usage control includes an icon of the target virtual item.

When the apparatus provided in the foregoing embodiments implements functions of the apparatus, the division of the foregoing functional modules is merely an example for description. In actual application, the functions may be assigned to and completed by different functional modules according to requirements, that is, an internal structure of the device is divided into different functional modules, to complete all or some of the functions described above. In addition, the apparatus and method embodiments provided in the foregoing embodiments belong to the same conception. For the specific implementation process, refer to the method embodiments, and details are not described herein again.

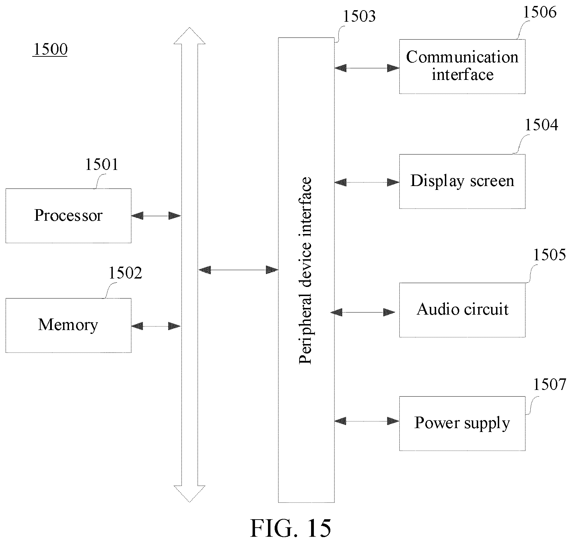

FIG. 15 is a structural block diagram of a terminal 1500 according to an embodiment of the present disclosure. The terminal 1500 may be a mobile phone, a tablet computer, a smart television, a multimedia playback device, or a personal computer (PC). The terminal 1500 may be the terminal described in the embodiment of FIG. 1.

Generally, the terminal 1500 includes a processor 1501 and a memory 1502.

The processor 1501 may include one or more processing cores, for example, a 4-core processor or an 8-core processor. The processor 1501 may be implemented by using at least one hardware form of a digital signal processor (DSP), a field-programmable gate array (FPGA), and a programmable logic array (PLA). The processor 1501 may alternatively include a main processor and a coprocessor. The main processor is configured to process data in an active state, also referred to as a central processing unit (CPU). The coprocessor is a low-power processor configured to process data in a standby state. In some embodiments, the processor 1501 may be integrated with a graphics processing unit (GPU). The GPU is configured to render and draw content that needs to be displayed on a display screen. In some embodiments, the processor 1501 may further include an artificial intelligence (AI) processor. The AI processor is configured to process computing operations related to machine learning (ML).

The memory 1502 may include one or more computer-readable storage media. The computer-readable storage media may be non-transient. The memory 1502 may further include a high-speed random access memory (RAM) and a non-volatile memory, for example, one or more disk storage devices or flash memory devices.

In some embodiments, the terminal 1500 may include a peripheral device interface 1503 and at least one peripheral device. The processor 1501, the memory 1502, and the peripheral device interface 1503 may be connected through a bus or a signal cable. Each peripheral device may be connected to the peripheral device interface 1503 through a bus, a signal cable, or a circuit board. Specifically, the peripheral device may include at least one of a display screen 1504, an audio circuit 1505, a communication interface 1506, or a power supply 1507.

A person skilled in the art may understand that the structure shown in FIG. 15 does not constitute a limitation on the terminal 1500, and the terminal may include more components or fewer components than those shown in the figure, or some components may be combined, or a different component deployment may be used.

In an exemplary embodiment, a terminal is further provided, including a processor and a memory, the memory storing at least one instruction, at least one program, a code set, or an instruction set. The at least one instruction, the at least one program, the code set, or the instruction set is configured to be executed by one or more processors to implement the foregoing virtual item information transmission method or the foregoing virtual item information display method.

In an exemplary embodiment, a computer-readable storage medium is further provided, storing at least one instruction, at least one program, a code set, or an instruction set, and the at least one instruction, the at least one program, the code set, or the instruction set being executed by a processor of a terminal to implement the foregoing virtual item information transmission method or the foregoing virtual item information display method.

In some embodiments, the computer-readable storage medium may be a read-only memory (ROM), a RAM, a compact disc read-only memory (CD-ROM), a magnetic tape, a floppy disk, an optical data storage device, or the like.

In an exemplary embodiment, a computer program product or a computer program is further provided. The computer program product or the computer program includes computer instructions, and the computer instructions are stored in a computer-readable storage medium. A processor of a terminal reads the computer instructions from the computer-readable storage medium, and the processor executes the computer instructions, to cause the terminal to perform the foregoing virtual item information transmission method or the foregoing virtual item information display method.

"Plurality of" mentioned in the specification means two or more. "And/or" describes an association relationship for describing associated objects and represents that three relationships may exist. For example, A and/or B may represent the following three cases: Only A exists, both A and B exist, and only B exists. The character "/" generally indicates an "or" relationship between the associated objects. In addition, the step numbers described in this specification merely exemplarily show a possible execution sequence of the steps. In some other embodiments, the steps may not be performed according to the number sequence. For example, two steps with different numbers may be performed simultaneously, or two steps with different numbers may be performed according to a sequence contrary to the sequence shown in the figure. This is not limited in this embodiment of the present disclosure.

The foregoing description is merely exemplary embodiments of the present disclosure, but is not intended to limit the present disclosure. Any modification, equivalent replacement, or improvement made within the spirit and principle of the present disclosure shall fall within the protection scope of the present disclosure.

## Claims

1. A virtual item information transmission method, performed by a terminal, the method comprising:
displaying a game play interface of a multiplayer online game;
displaying a virtual item selection interface of the multiplayer online game in response to an item selection operation, the virtual item selection interface comprising an option of at least one virtual item; and
displaying, in response to an information transmission operation on a target virtual item in the at least one virtual item, item usage suggestion information transmitted to a target recipient account, the item usage suggestion information being used for instructing the target recipient account to use the target virtual item in the multiplayer online game.

2. The method according to claim 1, wherein the displaying the item usage suggestion information transmitted to the target recipient account comprises:
displaying an option of at least one candidate recipient account; and
transmitting, in response to a selection operation on the target recipient account in the at least one candidate recipient account, the item usage suggestion information to a client logged in to by the target recipient account, and displaying the item usage suggestion information.

3. The method according to claim 2, wherein the displaying the option of at least one candidate recipient account comprises:
displaying the option of the at least one candidate recipient account around an option of the target virtual item.

4. The method according to claim 2, wherein the selection operation is a sliding operation from an option of the target virtual item to an option of the target recipient account.

5. The method according to claim 2, further comprising:
in response to the selection operation on the target recipient account, displaying an option of the target recipient account and options of other candidate recipient accounts in a distinguished manner.

6. The method according to claim 2, wherein after transmitting the item usage suggestion information to the client logged in to by the target recipient account, the method further comprises:
displaying recipient reselection prompt information, the recipient reselection prompt information being used for prompting a sender account whether to continue to select a recipient account, and transmit the item usage suggestion information to the selected recipient account; and
in response to a confirmation operation on the recipient reselection prompt information, returning to display the option of the at least one candidate recipient account.

7. The method according to claim 2, wherein after transmitting the item usage suggestion information to the client logged in to by the target recipient account, the method further comprises:
displaying information retransmission prompt information, the information retransmission prompt information being used for prompting a sender account whether to continue to transmit the item usage suggestion information; and
displaying the virtual item selection interface in response to a confirmation operation on the information retransmission prompt information.

8. The method according to claim 2, wherein
the option of the at least one candidate recipient account comprises an icon of a virtual object controlled by the at least one candidate recipient account;
or,
the option of the at least one candidate recipient account comprises an avatar of the at least one candidate recipient account.

9. The method according to claim 2, wherein the option of the at least one candidate recipient account comprises an option of a default or recommended target recipient account; and
after displaying the option of at least one candidate recipient account, the method further comprises:
when the option of the default or recommended target recipient account is a target recipient account intended by a sender account, transmitting, in response to ending the information transmission operation, the item usage suggestion information to a client logged in to by the default or recommended target recipient account.

10. The method according to claim 1, further comprising:
exchanging or reserving to exchange for the target virtual item in response to a first operation for an option of the target virtual item;
or,
displaying, in response to a second operation for an option of the target virtual item, the item usage suggestion information transmitted to the target recipient account,
the first operation being different from the second operation.

11. A virtual item information display method, performed by a terminal, the method comprising:
displaying a game play interface of a multiplayer online game;
receiving item usage suggestion information from a sender account, the item usage suggestion information being used for instructing to use a target virtual item in the multiplayer online game; and
displaying a shortcut usage control of the target virtual item based on the item usage suggestion information, the shortcut usage control being used for selecting and using the target virtual item.

12. The method according to claim 11, wherein the displaying the shortcut usage control of the target virtual item based on the item usage suggestion information comprises:
displaying the item usage suggestion information in a chat session presentation area of the multiplayer online game, the item usage suggestion information comprising the shortcut usage control of the target virtual item.

13. The method according to claim 11, wherein after displaying the shortcut usage control of the target virtual item based on the item usage suggestion information, the method further comprises:
exchanging or reserving to exchange for the target virtual item in response to a trigger operation for the shortcut usage control.

14. The method according to any one of claims 11 to 13, wherein the shortcut usage control comprises an icon of the target virtual item.

15. A virtual item information transmission apparatus, comprising:
an interface display module, configured to display a game play interface of a multiplayer online game,
the interface display module being further configured to display a virtual item selection interface of the multiplayer online game in response to an item selection operation, the virtual item selection interface comprising an option of at least one virtual item; and
an information transmission module, configured to display, in response to an information transmission operation on a target virtual item in the at least one virtual item, item usage suggestion information transmitted to a target recipient account, the item usage suggestion information being used for instructing the target recipient account to use the target virtual item in the multiplayer online game.

16. A virtual item information display apparatus, comprising:
an interface display module, configured to display a game play interface of a multiplayer online game,
an information receiving module, configured to receive item usage suggestion information from a sender account, the item usage suggestion information being used for instructing to use a target virtual item in the multiplayer online game; and
a control display module, configured to display a shortcut usage control of the target virtual item based on the item usage suggestion information, the shortcut usage control being used for selecting and using the target virtual item.

17. A terminal, comprising a processor and a memory, the memory storing at least one instruction, at least one program, a code set, or an instruction set, and the at least one instruction, the at least one program, the code set, or the instruction set being loaded and executed by the processor to implement the virtual item information transmission method according to any one of claims 1 to 10 or the virtual item information display method according to any one of claims 11 to 14.

18. A computer-readable storage medium, storing at least one instruction, at least one program, a code set, or an instruction set, and the at least one instruction, the at least one program, the code set, or the instruction set being loaded and executed by a processor to implement the virtual item information transmission method according to any one of claims 1 to 10 or the virtual item information display method according to any one of claims 11 to 14.

19. A computer program product or a computer program, comprising computer instructions, the computer instructions being stored in a computer-readable storage medium, a processor reading and executing the computer instructions from the computer-readable storage medium, to implement the virtual item information transmission method according to any one of claims 1 to 10 or the virtual item information display method according to any one of claims 11 to 14.
